# EUROPÄISCHE PATENTSCHRIFT

(11) **EP 3 239 577 B1**
(45) Veröffentlichungstag und Bekanntmachung des Hinweises auf die Patenterteilung: **23.01.2019**
(21) Anmeldenummer: 17152637.9
(22) Anmeldetag: 23.01.2017
(51) Int. Cl.: F16L 3/12, F16L 3/10, F16L 3/127, F16L 3/133, F16L 3/137, E21F 17/02, H01Q 1/12, H01Q 13/20, H02G 3/32

(54) **HALTEVORRICHTUNG FÜR EIN KABEL ODER ROHR**
RETAINING DEVICE FOR A CABLE OR TUBE
DISPOSITIF DE RETENUE POUR UN CÂBLE OU UN TUYAU

(30) Priorität: 27.04.2016 AT 503762016
(43) Veröffentlichungstag der Anmeldung: 01.11.2017
(73) Patentinhaber: EFCO Befestigungstechnik AG, 8606 Nänikon (CH)
(72) Erfinder: DOPPELBAUER, Thomas, 6800 Feldkirch (AT)
(74) Vertreter: Torggler & Hofinger Patentanwälte

(56) Entgegenhaltungen:
- WO-A1-93/16312
- WO-A2-2016/096149
- CN-U- 204 254 053
- DE-A1- 19 742 076
- US-A1- 2007 205 335

## Beschreibung

Die Erfindung betrifft eine Haltevorrichtung für ein Kabel oder Rohr mit den Merkmalen des Oberbegriffs des Anspruchs 1.

Es sind gattungsgemäße Haltevorrichtungen bekannt, bei welchen die Befestigungsvorrichtung für das Kabel oder Rohr einen am Ständer angeordneter Haken aufweist, an welchem das Kabel oder Rohr mittels eines Befestigungsbands (nach Art eines Kabelbinders) unter Einsatz eines geeigneten Werkzeugs befestigt wird. Weil die Befestigungsvorrichtung den Haltefuß verdeckt, weist der Haken eine Durchtrittsöffnung auf, die den Durchtritt eines Werkzeugs zum Festziehen eines den Haltefuß mit dem Untergrund verbindenden Befestigungsmittels gestattet. Ein nicht-brennbares Sicherungsband, welches zusätzlich zur Befestigungsvorrichtung vorgesehen ist, wird ebenfalls durch die Durchtrittsöffnung durchgeführt und gemeinsam mit der Montage der Haltevorrichtung am Untergrund mit der Haltevorrichtung befestigt. Während dieses Vorganges muss der Monteur das Sicherungsband relativ zur Haltevorrichtung korrekt ausrichten und halten, was gerade bei schlecht zugänglichen Montageorten nur schwer möglich ist.

Die WO 93/16312 schlägt hierzu vor, ein Sicherungsband in einer Nut der Haltevorrichtung versenkt anzuordnen, um das Sicherungsband relativ zur Haltevorrichtung korrekt auszurichten.

Die zwischen Prioritäts- und Anmeldedatum veröffentlichte WO 2016/096149 A2 sieht ein aus flexiblem Draht bestehendes Sicherungsband mit einer offenbaren Schlinge vor, welches durch eine entsprechend ausgebildete Aufnahme an der Haltevorrichtung in Position gehalten wird.

Aufgabe der Erfindung ist die Bereitstellung einer gattungsgemäßen Haltevorrichtung bei welcher die oben diskutierten Probleme vermieden werden.

Diese Aufgabe wird durch eine Haltevorrichtung mit den Merkmalen des Anspruchs 1 gelöst. Vorteilhafte Ausführungsformen der Erfindung sind in den abhängigen Ansprüchen definiert.

Weil die Haltevorrichtung eine Vorrichtung zum Anbringen des nicht-brennbaren Sicherungsbands an der Haltevorrichtung unabhängig von einer Montage der Haltevorrichtung am Untergrund aufweist, wobei das Sicherungsband mit sich selbst verbindbar ist, zur Ausbildung einer Schlaufe um ein durch die Befestigungsvorrichtung mit dem Haltefuß verbundenes Rohr oder Kabel und, wobei das Sicherungsband eine Durchtrittsöffnung aufweist, in welche ein freies Ende des Sicherungsbandes einführbar ist, wobei bevorzugt vorgesehen ist, dass das freie Ende des Sicherungsbandes eine klauenförmige Ausbildung aufweist und die Klauen des freien Endes das Sicherungsband im Bereich der Durchtrittsöffnung hintergreifen, wird das Sicherungsband einerseits relativ zur Haltevorrichtung korrekt ausgerichtet und gehalten und andererseits eine schnelle und einfache Montage gewährleistet.

Die Vorrichtung zum Anbringen des nicht-brennbaren Sicherungsbandes an der Haltevorrichtung kann auf vielfältige Art ausgebildet sein, z. B.:
- wenigstens eine an der Haltevorrichtung angeordnete Halteklammer und/oder
- wenigstens ein an der Haltevorrichtung angeordneter Kanal und/oder
- wenigstens eine Klebestelle zwischen der Haltevorrichtung und dem Sicherungsband

Die Befestigung des Sicherungsbandes am Untergrund erfolgt bevorzugt über jenes Befestigungsmittel, über welches die Haltevorrichtung am Untergrund befestigt ist. Alternativ oder zusätzlich könnte natürlich auch ein gesondertes Befestigungsmittel zur Befestigung des Sicherungsbands am Untergrund vorgesehen sein.

Vorzugsweise ist die Haltevorrichtung - abgesehen vom nicht-brennbaren Sicherungsband und Befestigungsmitteln - einstückig ausgebildet.

Vorzugsweise besteht die Haltevorrichtung - abgesehen vom nicht-brennbaren Sicherungsband und Befestigungsmitteln - aus einem elektrisch isolierendem Material.

Vorzugsweise besteht die Haltevorrichtung - abgesehen vom nicht-brennbaren Sicherungsband und Befestigungsmitteln - aus einem (vorzugsweise elektrisch isolierendem) Kunststoff.

Das Sicherungsband kann einstückig oder mehrteilig ausgebildet sein.

Die Haltevorrichtung ist bevorzugt mit dem Sicherungsband vorkonfektioniert.

Ausführungsbeispiele der Erfindung werden anhand der Figuren diskutiert. Es zeigen:
- Fig. 1: eine isometrische Ansicht eines ersten Ausführungsbeispiels
- Fig. 2: eine weitere isometrische Ansicht zur Fig. 1
- Fig. 3: eine weitere isometrische Ansicht zur Fig. 1
- Fig. 4: eine Seitenansicht zur Fig. 1
- Fig. 5: eine Ansicht zur Fig. 1 in einer Richtung normal auf die von der Montageseite abgewandte Seite des Montagefußes
- Fig. 6a-c: verschiedene Ansichten zu einem zweiten Ausführungsbeispiel
- Fig. 7: eine weitere isometrische Ansicht zur Fig. 1
- Fig. 8a-e: ein Ausführungsbeispiel eines nicht-brennbaren Sicherungsbades
- Fig. 9: eine isometrische Ansicht eines dritten Ausführungsbeispiels
- Fig. 10: eine isometrische Ansicht eines vierten Ausführungsbeispiels
- Fig. 11: eine weitere isometrische Ansicht zur Fig. 10
- Fig. 12: eine Rückansicht zur Fig. 10
- Fig. 13: eine Ansicht zur Fig. 10 in einer Richtung annähernd normal auf die von der Montageseite abgewandte Seite des Montagefußes
- Fig. 14: eine weitere isometrische Ansicht zur Fig. 10
- Fig. 15: eine weitere isometrische Ansicht zur Fig. 10
- Fig. 16: eine weitere isometrische Ansicht zur Fig. 10 mit eingesetztem Sicherungsband
- Fig. 17: eine weitere isometrische Ansicht zur Fig. 16

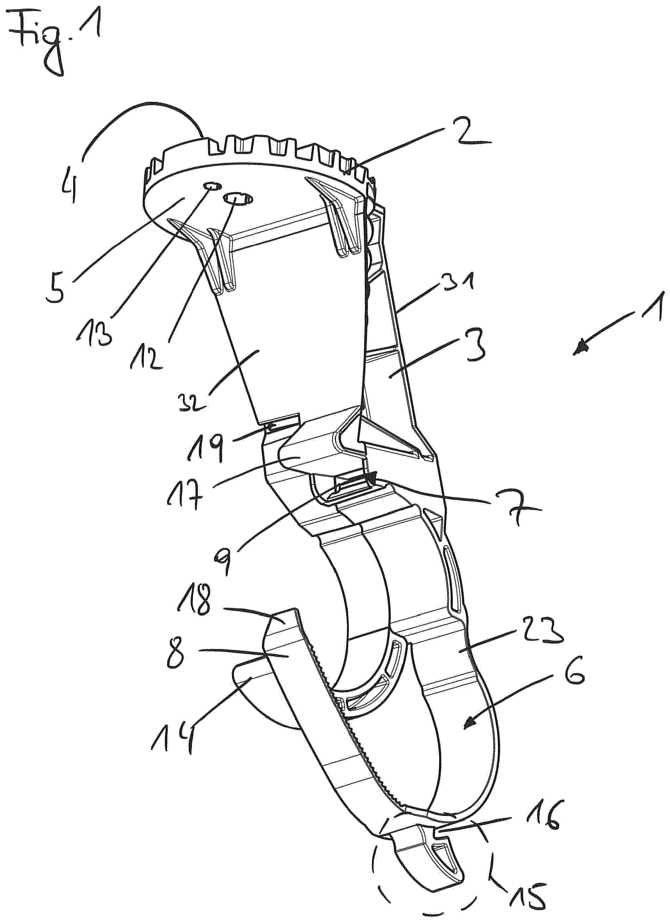

Fig. 1 zeigt ein erstes Ausführungsbeispiel einer erfindungsgemäßen Haltevorrichtung 1 für ein Kabel oder Rohr, bevorzugt für ein sogenanntes Strahlkabel (Strahlkabel sind elektrische Leckwellenleiter, die als langgestreckte Antennen verwendet werden).

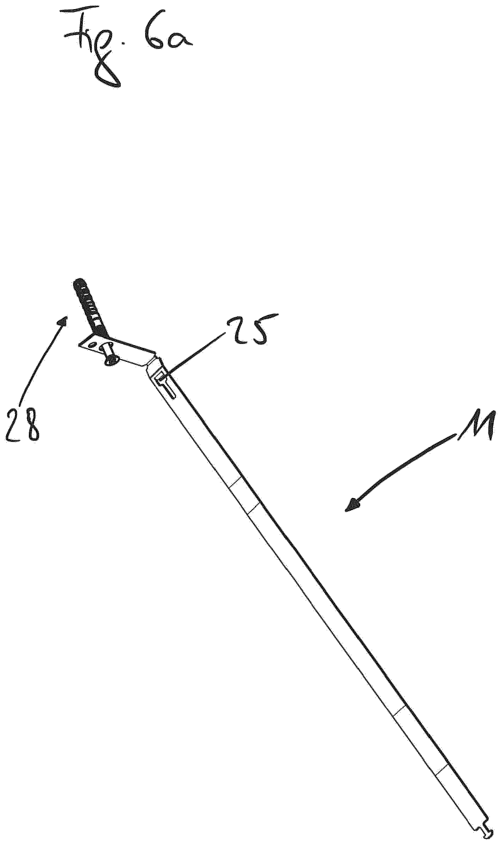

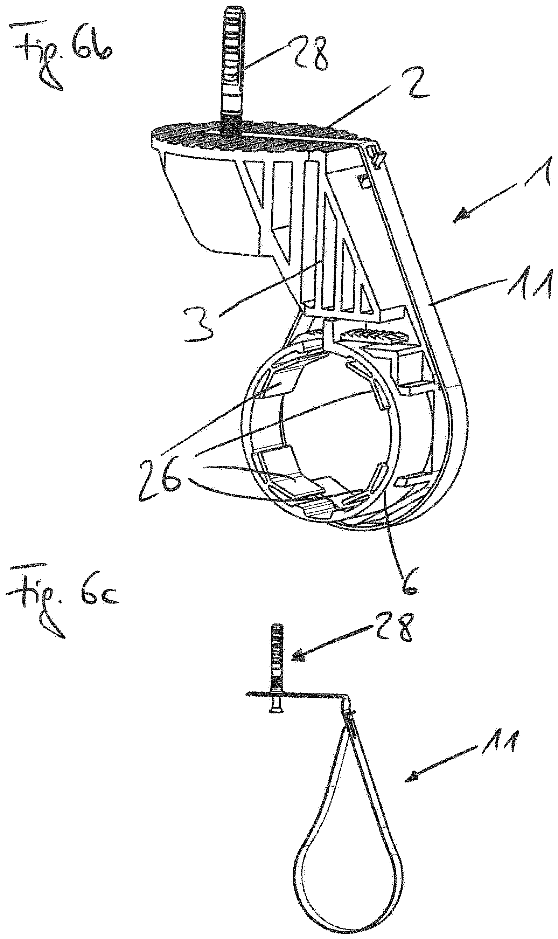

Die Haltevorrichtung 1 weist einen Haltefuß 2 zur Montage der Haltevorrichtung 1 an einem Untergrund (z. B. Kabeltasse, Decke oder Wand eines Bauwerkes - vorzugsweise eines Tunnels oder Schachts, usw.) auf. Die Montage erfolgt mit der Montageseite 4 des Haltefuß 2, z. B. indem in die erste und/oder zweite Befestigungsöffnung 12, 13 ein Befestigungsmittel 28 (vgl. z. B. Fig. 6) eingesetzt und mit dem Untergrund verbunden wird. Beispiele für Befestigungsmittel 28 sind Schrauben, Dübel (insbesondere Metalldübel), Nägel.

Es ist eine Befestigungsvorrichtung zur Befestigung des Kabels oder Rohres am Haltefuß 2 vorgesehen, wobei die Befestigungsvorrichtung an einer von der Montageseite 4 abgewandten Seite 5 des Haltefußes 2 angeordnet ist.

Die Befestigungsvorrichtung 2 weist einen mit dem Haltefuß 2 verbundenen Ständer 3 auf, welcher an einem seitlichen Randbereich des Haltefußes 2 angeordnet ist, sodass die von der Montageseite 4 abgewandte Seite 5 in einer Richtung normal auf die Seite 5 wenigstens teilweise zugänglich ist. Dies erleichtert die Montage der Haltevorrichtung 1 am Untergrund, das gewählte Befestigungsmittel 28 kann ohne weitere Maßnahmen (insbesondere ohne den Einsatz von Adaptern) direkt in die erste und/oder zweite Befestigungsöffnung 12, 13 eingesetzt und mit einem geeigneten Setzwerkzeug (z. B. Hammer, Schrauber, luft- oder pulvergetriebene Werkzeuge) mit dem Untergrund verbunden werden kann. Das Setzwerkzeug hat neben dem Ständer 3 Platz. Der Ständer 3 definiert einen festen Abstand von der Befestigungsvorrichtung für das Kabel oder Rohr zum Montagefuß 2. Natürlich kann der Abstand des Kabels oder Rohres zum Untergrund durch den Einsatz von Abstandhaltern, die zwischen Montagefuß 2 und Untergrund angeordnet werden (vorzugsweise mit der Montageseite 4 des Montagefußes 2 verbunden) vergrößert werden. Zur korrekten Positionierung solcher Abstandhalter kann der Montagefuß 2 wenigstens eine Aufnahme 21 für wenigstens einen am Abstandhalter angeordneten Positionierzapfen aufweisen.

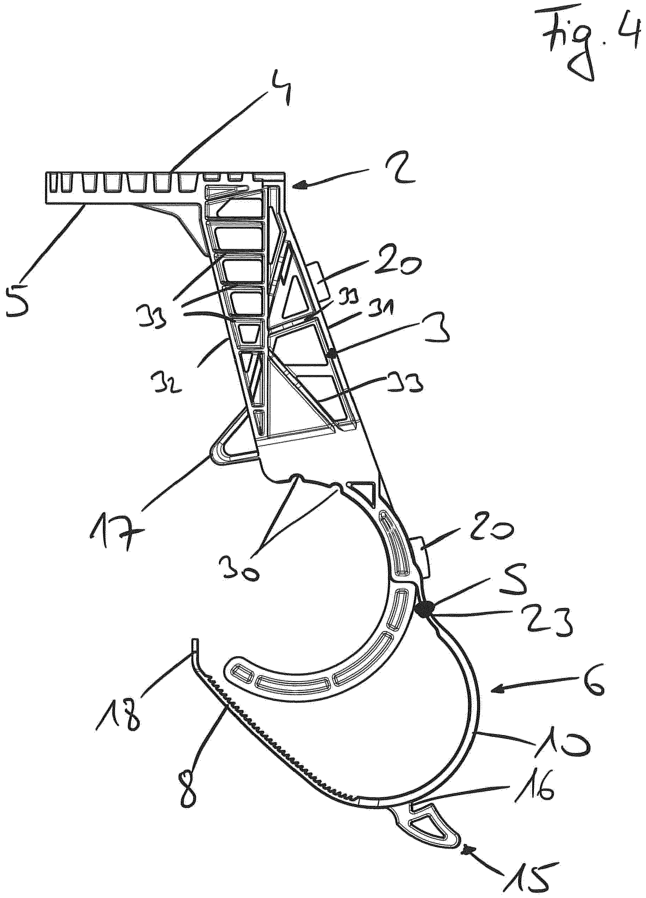

Wie in Fig. 4 gut ersichtlich, kann der Ständer 3 nach Art eines Fachwerkes ausgebildet sein. So erreicht man mit geringem Materialeinsatz eine ausreichende Steifigkeit um die Tragkraft der Haltevorrichtung 1 zu gewährleisten. Der Ständer 3 kann aber elastisch genug ausgebildet sein, um sich beispielsweise bei Druckstößen (diese können z. B. durch einen einen Tunnel durchquerenden Zug entstehen) über seine gesamte Länge elastisch verformen zu können und anschließend wieder in die Ausgangslage zurückkehren zu können. So kann der Haltefuß 2 und ein den Haltefuß 2 mit dem Untergrund verbindendes Befestigungsmittel 28 vor dynamischen Kräften weitgehend geschützt werden. Punktuelle Belastungsspitzen der Haltevorrichtung 1 - vor allem im Bereich der Befestigungsvorrichtung für das Kabel oder Rohr und im Bereich der Befestigungsmittel 28 - wie sie aus dem Stand der Technik bekannt sind, können so vermieden werden, da die dynamischen Kräfte zumindest teilweise bereits im Ständer 3 aufgenommen werden. Das Fachwerk bildet ein Feder-Dämpfer-System. Der Ständer 3 weist zwei Längsstreben 31, 32 auf, die den Montagefuß 2 mit der Befestigungsvorrichtung verbinden. Zwischen diesen Längsstreben 31, 32 verlaufen mehrere Querstreben 33.

Ein weiterer Vorteil der Zugänglichkeit der von der Montageseite 4 abgewandte Seite 5 des Haltefußes 2 ist die Möglichkeit einer Kontrolle der sicheren Montage (z. B. Sichtkontrolle, Kontrolle mittels eines Drehmomentschlüssels usw.) und die Möglichkeit einer allfällig erforderlichen Nachbesserung der Montage. Die leichte Zugänglichkeit der Seite 5 des Haltefußes 2 bietet auch Vorteile für eine möglicherweise erforderliche Demontage des Kabels oder Rohres vom Untergrund, ohne die Notwendigkeit das Kabel oder Rohr von der Befestigungsvorrichtung zur Befestigung des Kabels oder Rohres am Haltefuß 2 lösen zu müssen.

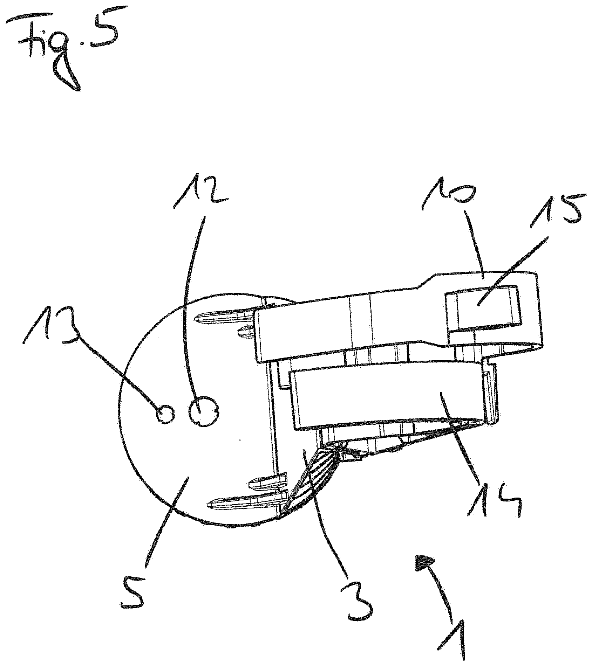

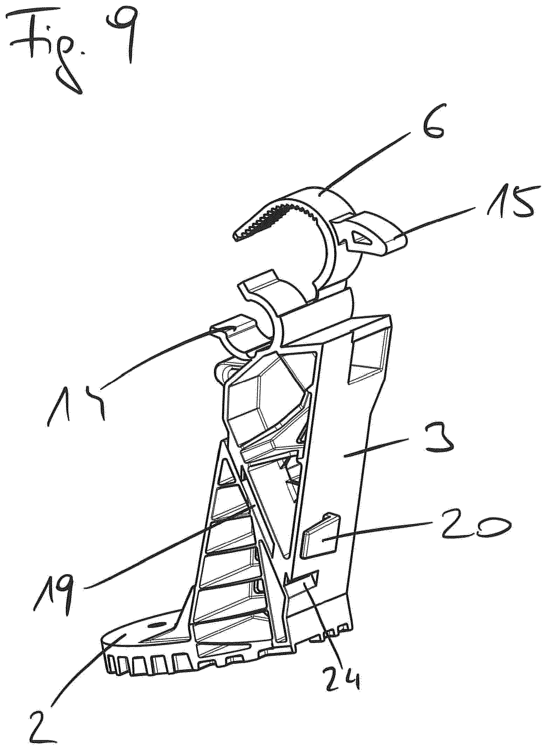

Ist die Haltevorrichtung 1 am Untergrund montiert, kann das Kabel oder Rohr mittels der Vorfixierung 14 an der Haltevorrichtung 1 vorpositioniert werden. Das Kabel oder Rohr wird in die hier hakenförmige Vorfixierung 14 eingelegt und kann anschließend axial und/oder radial ausgerichtet werden. Anders als in den Fig. 1 bis 5 dargestellt könnte die Vorfixierung 14 auch andersartig ausgebildet sein, z. B. - wie in Fig. 9 gezeigt - in Form von Federklammern. In der Ausführung der Fig. 9 kann das Kabel oder Rohr zwischen zwischen den Federklammern eingeklemmt und so vorpositioniert werden.

Ist das Kabel wie gewünscht ausgerichtet, kann die Befestigung des Kabels oder Rohr am Haltefuß 2 mittels der Befestigungsvorrichtung erfolgen.

Im gezeigten Ausführungsbeispiel ist dies auf besonders einfache Art und Weise möglich, ggf. sogar werkzeuglos. Zu diesem Zweck weist das Befestigungsband 6 in diesem Ausführungsbeispiel einen bügelförmig ausgebildeten und vom Haltefuß 2 abstehenden Abschnitt 10 auf (vgl. z. B. Fig. 4). Das freie Bandende 8 kann durch Druckausübung auf den bügelförmig ausgebildeten Abschnitt 10 des Befestigungsbandes 6 in die Öffnung 9 des Bandverschlusses 7 eingeführt und durch den Bandverschluss 7 (dieser kann z. B. in Form einer zumindest am freien Bandende 8 angeordneten Verzahnung, welche mit einer in der Öffnung 9 angeordneten Rastnase zusammenwirkt ausgebildet sein) verriegelt werden. Zur Erleichterung des Vorganges ist in diesem Ausführungsbeispiel eine Einführhilfe vorgesehen. Diese weist einen am freien Bandende 8 angeordneten Schnabel 18 auf, der über eine vor der Öffnung 9 angeordnete Rampe 17 in die Öffnung 9 geleitet wird. Die Druckausübung kann z. B. werkzeuglos durch Anlage einer Hand erfolgen. In diesem Ausführungsbeispiel ist eine Spannhilfe 15 vorgesehen, die einen definierten Angriffspunkt zur Verfügung stellt. Dies kann sowohl von Hand (z. B. mittels eines Daumens) oder über ein Werkzeug (z. B. mit einem definierten Drehmoment) erfolgen. Die hier vorgesehene und z. B. in Fig. 4 erkennbare Ausnehmung 16 dient zum Angriff eines gabelförmigen Werkzeugs.

Es ist vorteilhaft, wenn zumindest ein Gelenk 23 (hier als Filmgelenk ausgebildet) vorgesehen ist, welches eine Schwenkachse S für eine Schwenkbewegung des bügelförmig ausgebildeten Abschnitts 10 des Befestigungsbandes 6 bildet. Hier ist das Gelenk 23 zwischen einem am Ständer 3 angeordneten Abschnitt der Befestigungsvorrichtung und dem Befestigungsband 6 angeordnet. Natürlich könnte auch mehr als ein Gelenk 23 vorgesehen sein. Das Gelenk 23 könnte in anderer Form, z. B. als Achszapfgelenk, ausgebildet sein. Es ist nicht unbedingt ein Gelenk 23 erforderlich. Z. B. könnte das Befestigungsband 6 aufgrund seiner vorgegebenen Form bei Druckausübung auf den bügelförmig ausgebildeten Abschnitt 10 eine definierte Bewegung ausführen. Zu diesem Zweck könnte das Befestigungsband 6 auf seiner dem Stützfuß 2 zugewandten Seite eine Vielzahl von nebeneinander angeordneten Stegen aufweisen. Die Stege nähern sich unter Druckausübung maximal bis zur Anlage einander an.

Alternativ zur weiter oben beschriebenen Ausbildung des Bandverschlusses 7 mit einer Verzahnung und einer Rastnase kann z. B. auch eine reibschlüssige Ausbildung des Bandverschlusses 7 vorgesehen sein.

Das Befestigungsband 6 kann Flügel 26 für den Ausgleich unterschiedlicher Durchmesser der Kabel oder Rohre aufweisen (vgl. Fig. 6).

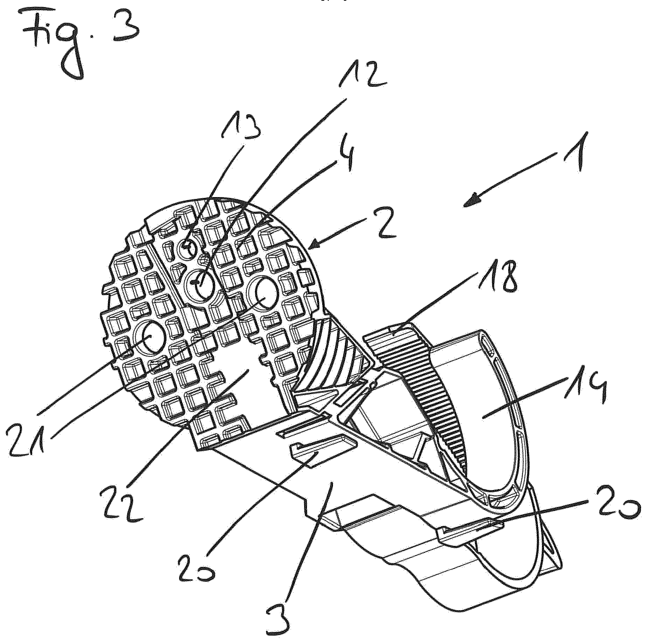

Insbesondere in den Fig. 3, 4 und 7 ist eine bei diesem Ausführungsbeispiel vorgesehene Vorrichtung zum Anbringen eines nicht-brennbaren Sicherungsbands 11 an der Haltevorrichtung 1 (vgl. Fig. 6a, 6b) unabhängig von einer Montage der Haltevorrichtung 1 an einem Untergrund erkennbar. Die Vorrichtung zum Anbringen des Sicherungsbandes 11 ist zusätzlich zur Befestigungsvorrichtung für das Kabel oder Rohr vorgesehen. Das nicht-brennbare Sicherungsband 11 bildet im Brandfall eine Absturzsicherung für das Kabel oder Rohr, welche ein Abstürzen des Kabels oder Rohres auch bei Zerstörung des Haltefußes 2, des Ständers 3 und der Befestigungsvorrichtung verhindert. Die Vorrichtung zum Anbringen des Sicherungsbandes 11 gestattet einen definierten Verlauf des Sicherungsbandes 11 entlang der Haltevorrichtung 1 und erleichtert so eine -vorzugsweise werkzeuglose - Befestigung des Sicherungsbandes 11 an sich selbst.

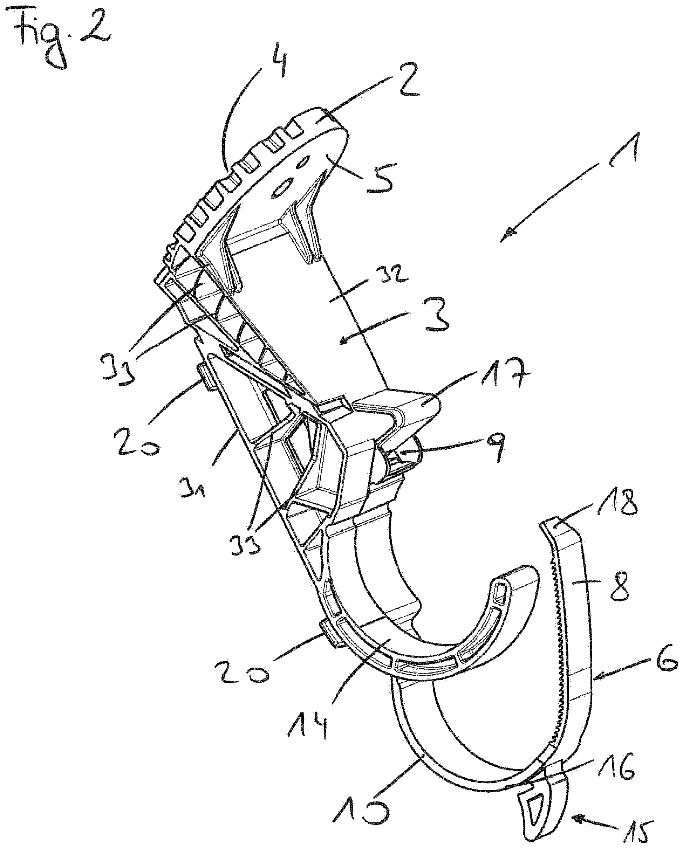

Im gezeigten Ausführungsbeispiel umfasst die Vorrichtung zum Anbringen des Sicherungsbandes 11 zwei Halteklammern 20 (ggf. könnte auch nur eine Halteklammer 20 oder mehr als zwei Halteklammern 20 vorgesehen sein) und eine an der Montageseite 4 des Haltefußes 2 angeordnete Ausnehmung 22 (diese ist nicht unbedingt erforderlich). Weiters ist eine vor allem in Fig. 2 erkennbare Führung 19 für das Sicherungsband 11 vorgesehen.

Noch vor der Montage der Haltevorrichtung 1 am Untergrund und vor der Vorfixierung des Kabels oder Rohres wird das Sicherungsband 11 in die Ausnehmung 22 und die Halteklammern 20 eingelegt. Das Sicherungsband 11 ist bereits jetzt relativ zur Haltevorrichtung 1 korrekt ausgerichtet und gehalten.

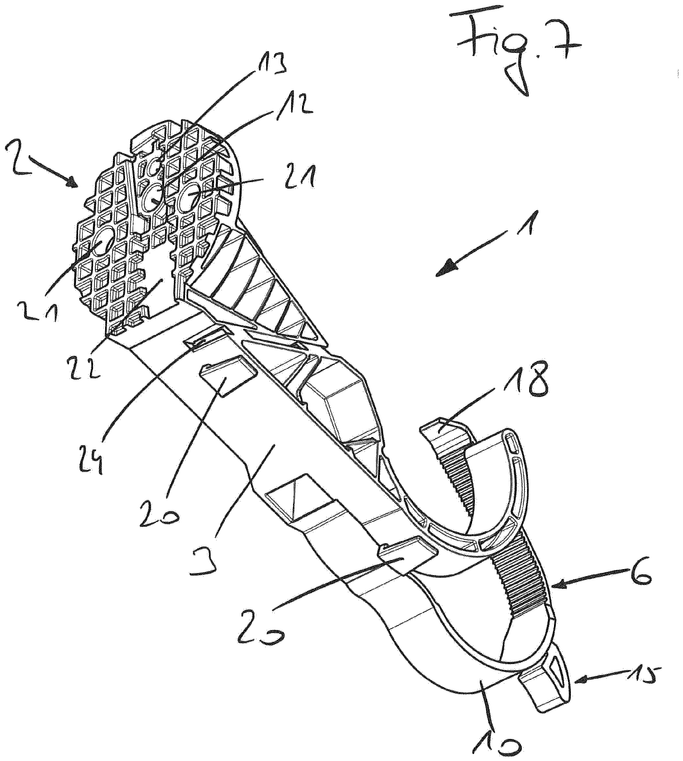

Dann erfolgt die Montage der Haltevorrichtung 1 am Untergrund. Dann erfolgt die Vorfixierung des Kabels oder Rohres. Anschließend wird das Sicherungsband 11 um das Kabel oder Rohr herum geführt, durch die Führung 19 hindurch geführt und tritt an der anderen Seite des Ständers 3 über eine Austrittsöffnung 24 aus (vgl. Fig. 7). Im Bereich der Austrittsöffnung 24 weist das Sicherungsband 11 eine Durchtrittsöffnung 25 auf, sodass das freie Ende des Sicherungsbandes 11 in diesem Bereich mit sich selbst verbunden werden kann. Das Sicherungsband 11 bildet in diesem Zustand eine das Kabel oder Rohr umgebende Schlaufe. Alternativ könnte ein seitliches Einhaken des freien Endes des Sicherungsbandes 11 am Sicherungsband 11 erfolgen. Für die Verbindung weist das freie Ende des Sicherungsbandes 11 in diesem Ausführungsbeispiel eine klauenförmige Ausbildung auf. Die Klauen des freien Endes können das Sicherungsband 11 im Bereich der Durchtrittsöffnung 25 hintergreifen. Eine andere Ausbildung der Verbindung (z. B. Kleben, Vernieten, usw.) wäre denkbar.

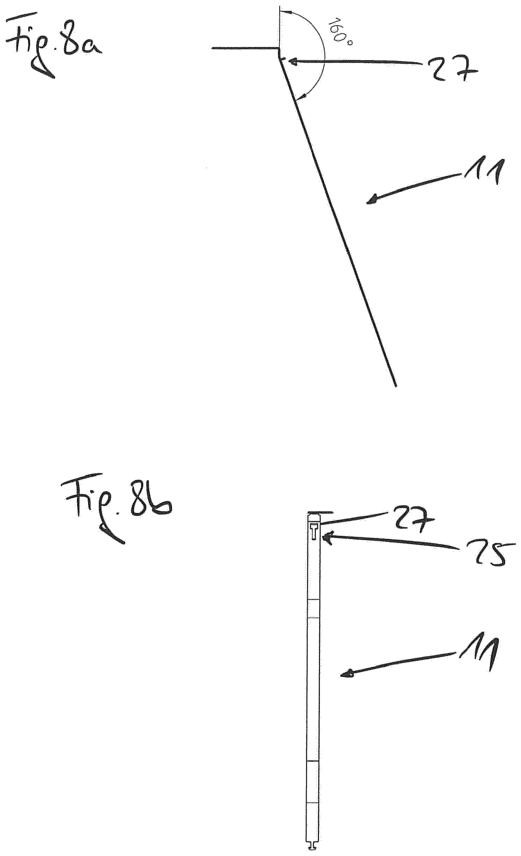

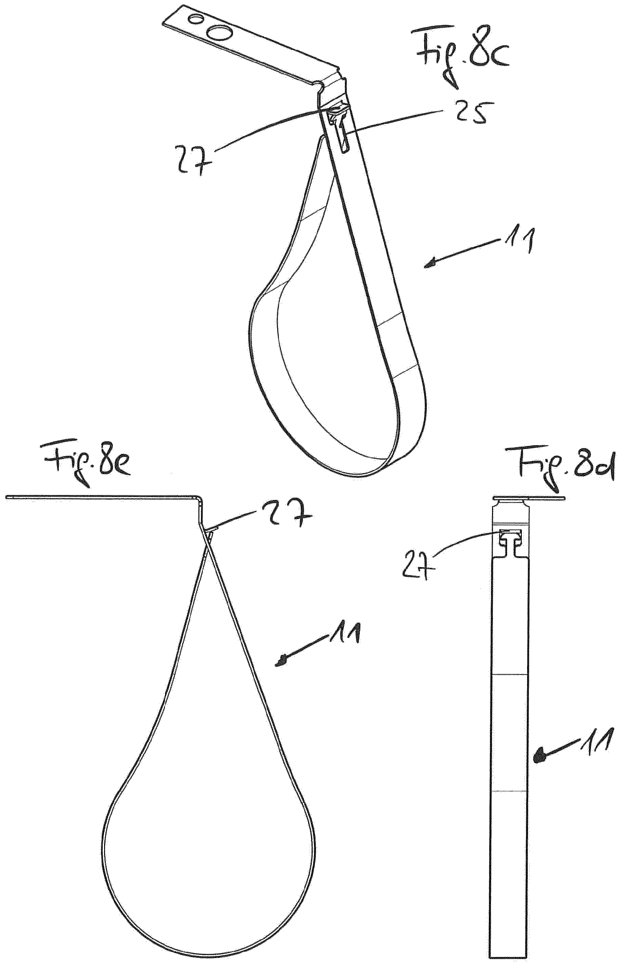

Die Durchtrittsöffnung 25 kann eine Verbreiterung zur Erleichterung des Einführens der Klauen aufweisen, wobei sich an die Verbreiterung ein schlitzförmiger Abschnitt anschließt. Es kann vorgesehen sein, dass die Verbreiterung durch eine umbiegbare Sicherungslasche 27 verschließbar ist, wenn sich die Klaue im schlitzförmigen Abschnitt befindet (vgl. Fig. 8 - dort ist die Sicherungslasche 27 noch nicht umgebogen).

Es kann eine Einführhilfe 34 für das Sicherungsband 11 vorgesehen sein.

Im gezeigten Ausführungsbeispiel weist das Sicherungsband 11 eine vorgefertigte abgewinkelte Form auf (vgl. Fig. 8).

Es sind Öffnungen (hier am abgewinkelten Schenkel) vorgesehen, die mit am Haltefuß 2 angeordneten ersten und zweiten Befestigungsöffnungen 12, 13 fluchten, für einen Durchtritt der Befestigungsmittel 28.

Will man das Sicherungsband 11 von den Befestigungsmitteln 28 galvanisch trennen, können im Bereich der Öffnungen des Sicherungsbandes 11, welche den Durchtritt der Befestigungsmittel 28 gestatten, Hülsen oder Scheiben aus einem isolierenden Material angeordnet sein. Diese können einstückig mit dem Haltefuß 2 ausgebildet sein. Alternativ können die Hülsen oder Scheiben eingelegt werden.

Das nicht-brennbare Sicherungsband 11 kann - wie an sich bekannt - z. B. aus Metall oder Keramik bestehen.

Ein Ausführungsbeispiel eines nicht-brennbaren Sicherungsbandes 11 ist in Fig. 8 in unterschiedlichen Konfigurationen und Ansichten gezeigt.

Fig. 8a und 8b zeigen ein Sicherungsband 11, wie es dem Monteur vorgefertigt zur Verfügung gestellt wird. Die Fig. 8c, 8d und 8e zeigen in verschiedenen Ansichten das fertig montierte Sicherungsband 11 bei ausgeblendeter Haltevorrichtung 1.

Das Ausführungsbeispiel der Fig. 6 unterscheidet sich von jenem der Fig. 1 dadurch, dass
- das Befestigungsband 6 Flügel 26 für den Ausgleich unterschiedlicher Durchmesser der Kabel oder Rohre aufweist
- die Vorfixierung 14 polygonal ausgebildet ist
- die Vorrichtung zum Anbringen des nicht-brennbaren Sicherungsbands 11 an der Haltevorrichtung 1 drei Halteklammern 20 aufweist
- das nicht-brennbare Sicherungsband 11 an der von der Montageseite 4 abgewandten Seite 5 des Haltefußes 2 befestigt wird

Fig. 6a zeigt nur das Sicherungsband 11 in dieser Stellung bei ausgeblendeter Haltevorrichtung 1. Fig. 6b zeigt die Haltevorrichtung 1 mit in die Halteklammern 20 (aus Gründen der Übersichtlichkeit nicht dargestellt) eingesetztem und am Haltefuß 2 befestigtem Sicherungsband 11, wobei das Sicherungsband 11 durch eine Führung 19 hindurch geführt und an sich selbst befestigt wurde. Fig. 6c zeigt nur das Sicherungsband 11 in dieser Stellung bei ausgeblendeter Haltevorrichtung 1.

Das Ausführungsbeispiel der Fig. 9 unterscheidet sich von jenem der Fig. 1 dadurch, dass
- die Vorrichtung zum Anbringen des nicht-brennbaren Sicherungsbands 11 an der Haltevorrichtung 1 nur eine Halteklammer 20 aufweist
- die Vorfixierung 14 in Form von Federklammern ausgebildet ist

In den gezeigten Ausführungsbeispielen verläuft das Sicherungsband 11 mit einem durch das Material der Haltevorrichtung 1 gebildeten Abstand zum Kabel oder Rohr, was vor allem beim Einsatz eines metallischen Sicherungsbandes 11 und der Ausbildung des Kabels als Strahlkabel vorteilhaft ist, weil so Störungen der Abstrahlung des Strahlkabels durch das metallische Sicherungsband 11 reduziert werden.

Die Befestigungsvorrichtung für das Kabel oder Rohr kann zumindest eine Positioniernut 30 aufweisen, zur lagerichtigen Positionierung des Kabels oder Rohr an der Haltevorrichtung 1, falls das Kabel oder Rohr mit zumindest einer Positionierwulst versehen sind.

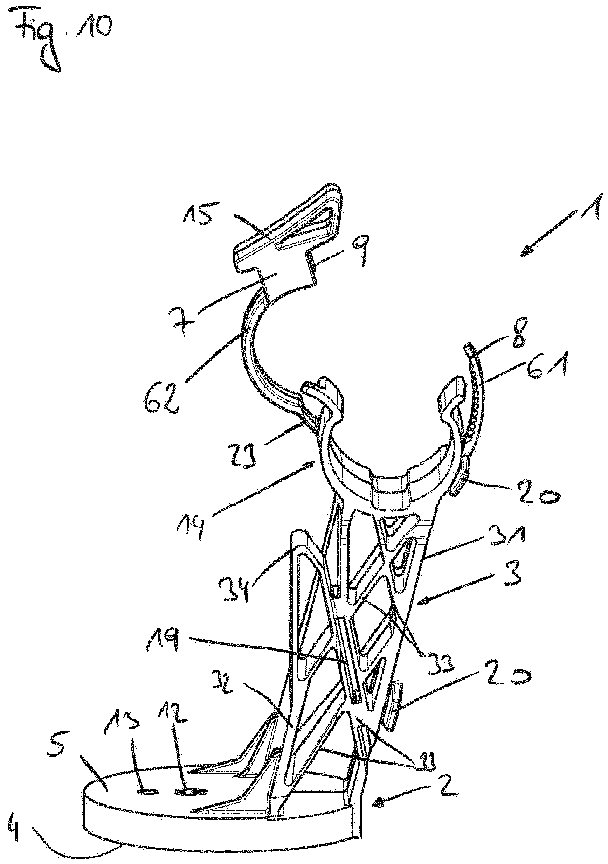

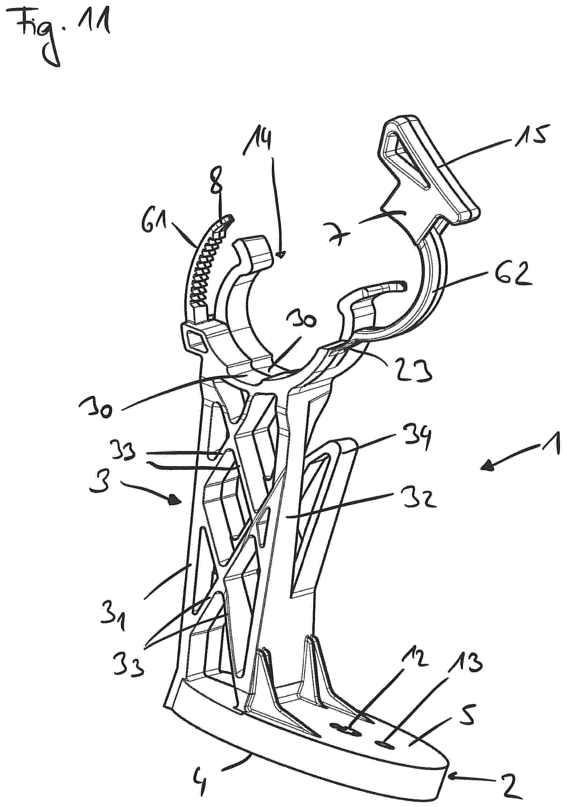

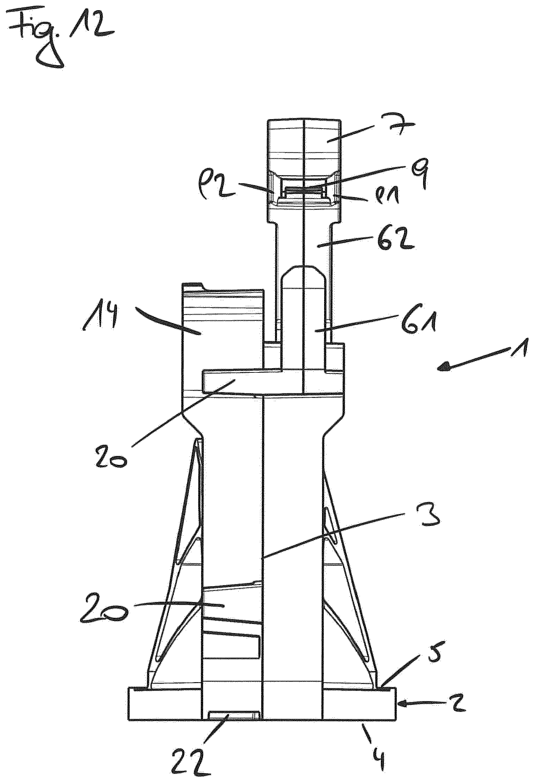

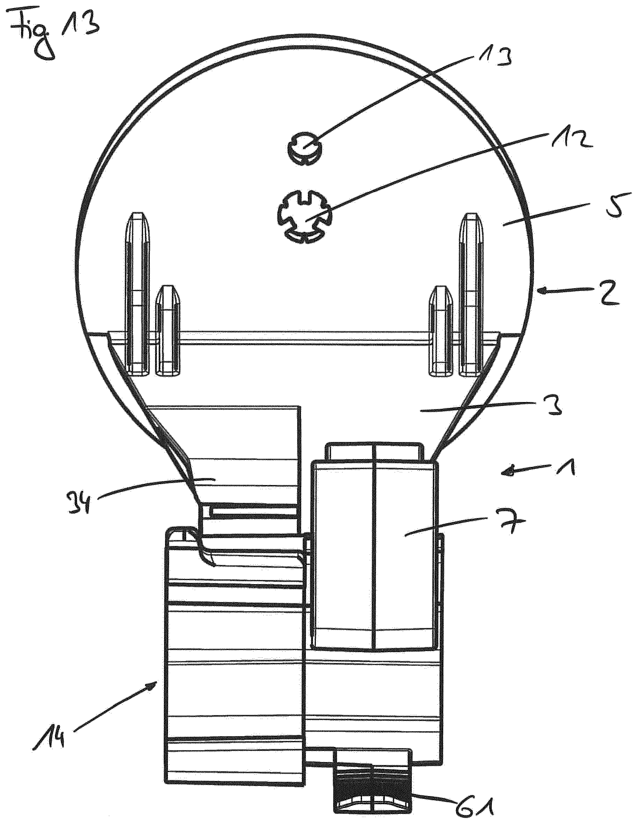

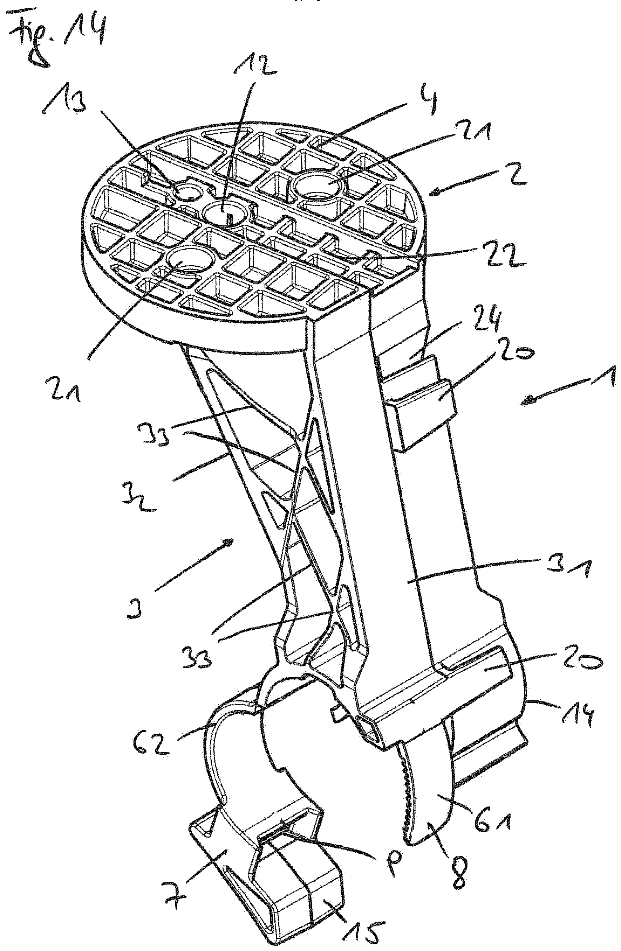

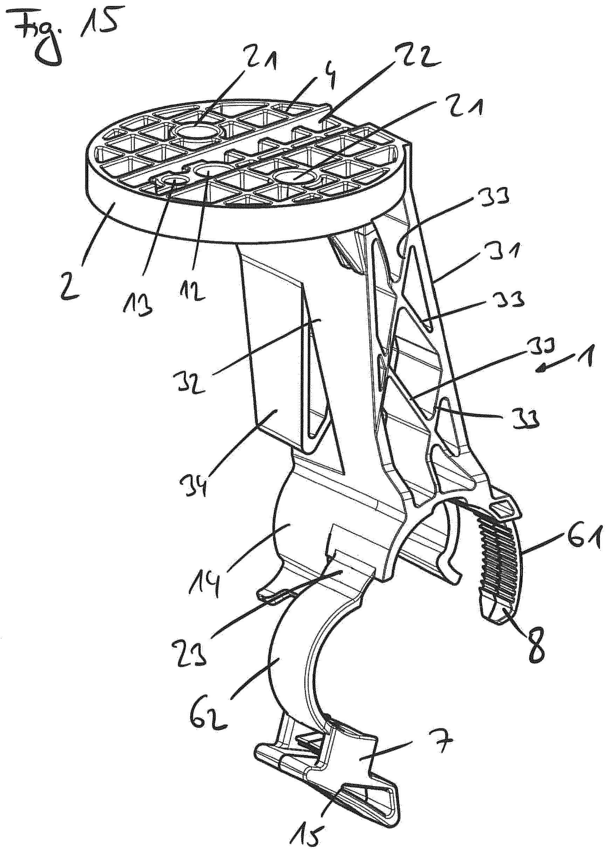

Das vierte Ausführungsbeispiel (vgl. Fig 10 bis 17) unterscheidet sich von den vorherigen Ausführungsbeispielen vor allem durch die unterschiedliche Ausbildung der Befestigungsvorrichtung für das Kabel oder Rohr. Statt eines Bandverschlusses ist beim vierten Ausführungsbeispiel ein Bügelverschluss vorgesehen. Die Befestigungsvorrichtung weist einen ersten Bügel 61 und einen über ein Gelenk 23 gelenkig mit dem Haltefuß 2 (über den Ständer 3) verbundenen zweiten Bügel 62 auf. Das freie Ende des zweiten Bügels 62 trägt die Öffnung 9 des Bügelverschlusses 7 und ist durch Druckausübung auf den zweiten Bügel 62 über das freie Ende 8 des ersten Bügels 61 bewegbar und so durch den Bügelverschluss 7 verriegelbar.

Das freie Ende 8 des ersten Bügels 61 ist hier mit einer Verjüngung ausgebildet, um das Einführen in die Öffnung 9 zu erleichtern. Zum selben Zweck weist die Öffnung 9 des Bügelverschlusses 7 zwei Einführschrägen 91, 92 auf.

Die Druckausübung kann z. B. werkzeuglos durch Anlage einer Hand erfolgen. In diesem Ausführungsbeispiel ist eine Spannhilfe 15 vorgesehen, die einen definierten Angriffspunkt zur Verfügung stellt. Dies kann sowohl von Hand (z. B. mittels eines Daumens) oder über ein Werkzeug (z. B. mit einem definierten Drehmoment) erfolgen.

Natürlich könnte auch mehr als ein Gelenk 23 vorgesehen sein. Das Gelenk 23 könnte in anderer Form, z. B. als Achszapfgelenk, ausgebildet sein.

Der Bügelverschluss 7 kann z. B. so ausgebildet sein, dass am freien Ende 8 des ersten Bügels 61 eine Rasterung angeordnet ist, die mit einer in der Öffnung 9 des Bügelverschlusses angeordneten Rastnase zusammenwirkt. Alternativ könnte auch zumindest ein Loch am ersten Bügel 61 angeordnet sein, in welches ein in der Öffnung 9 des Bügelverschlusses angeordneter Stift eindrückbar ist. Alternativ könnte auch vorgesehen sein, dass das freie Ende 8 des ersten Bügels 61 ohne Rasterung, Loch oder dgl. ausgebildet ist und in der Öffnung 9 des Bügelverschlusses ein begrenzt bewegbares Element (z. B. keil- oder kugelförmig) angeordnet ist, durch welches nach erfolgtem Einbringen des freien Ende 8 des ersten Bügels 61 in die Öffnung 9 ein selbsthemmendes Feststellen erfolgt.

Die Haltevorrichtung 1 ist bevorzugt mit dem Sicherungsband 11 vorkonfektioniert.

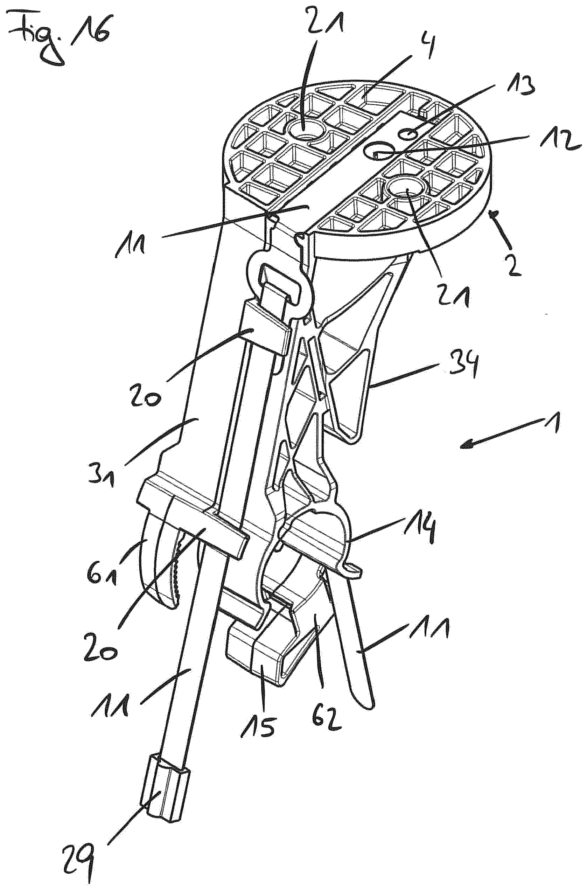

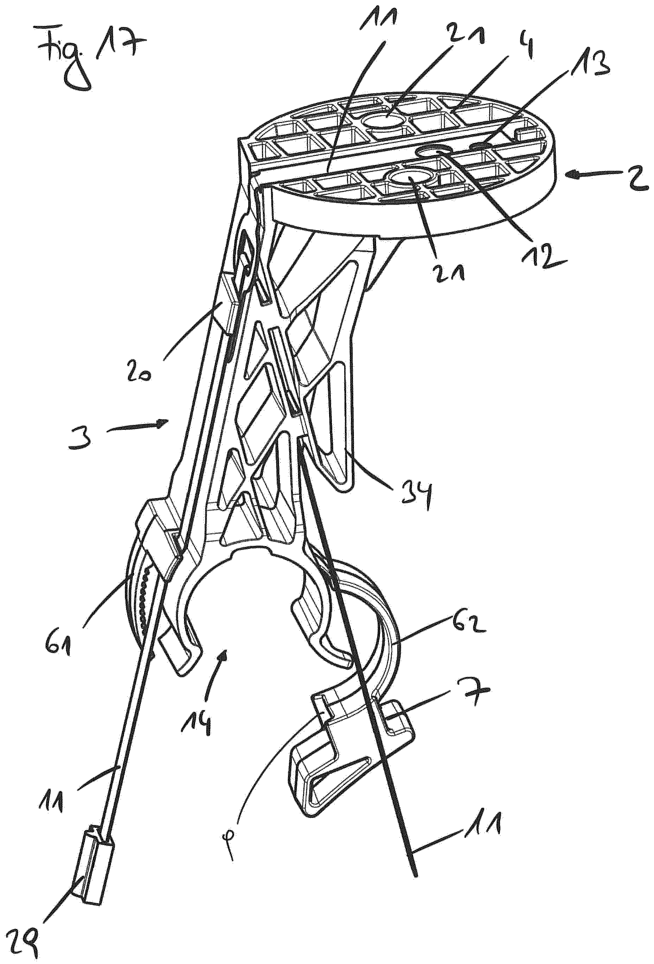

Das Sicherungsband 11 ist in dem in den Figuren 16 und 17 gezeigten Ausführungsbeispiel zweiteilig ausgeführt. Der erste Abschnitt wird im Bereich des Haltefußes 2 angeordnet und ist mit dem zweiten, hier V-förmig ausgebildeten Abschnitt verbunden, der im Bereich des Ständers 3 verläuft. Der erste Abschnitt weist mit den Befestigungsöffnungen 12, 13 des Haltefußes 2 fluchtende Öffnungen auf, damit eine gleichzeitige Befestigung des nicht-brennbaren Sicherungsbandes 11 und des Haltefußes 2 erfolgen kann. Die beiden freien Enden des zweiten Abschnitts (von denen ein Ende mit einem Bandverschluss 10 versehen ist) werden nach dem Anordnen des Kabels oder Rohres miteinander verbunden und würden bei einem Versagen des Bügelverschlusses (z. B. im Brandfall) das Kabel oder Rohr sicher am Untergrund halten.

### Bezugszeichenliste:

- 1: Haltevorrichtung
- 2: Haltefuß
- 3: Ständer
- 31, 32: Längsstreben des Ständers
- 33: Querstreben des Ständers
- 4: Montageseite
- 5: von der Montageseite abgewandte Seite
- 6: Befestigungsband
- 61: erster Bügel des Bügelverschlusses
- 62: zweiter Bügel des Bügelverschlusses
- 7: Bandverschluss
- 8: freies Bandende des Befestigungsbands bzw. ersten Bügels
- 9: Öffnung des Bandverschlusses bzw. Bügelverschlusses
- 91: Einführschräge der Öffnung des Bügelverschlusses
- 92: Einführschräge der Öffnung des Bügelverschlusses
- 10: bügelförmiger Abschnitt des Befestigungsbandes
- 11: nicht-brennbares Sicherungsband
- 12: erste Befestigungsöffnung
- 13: zweite Befestigungsöffnung
- 14: Vorfixierung
- 15: Spannhilfe
- 16: Öffnung der Spannhilfe
- 17: Rampe der Einführhilfe
- 18: Schnabel der Einführhilfe
- 19: Führung für Sicherungsband
- 20: Halteklammern für Sicherungsband
- 21: Aufnahme für Positionierzapfen
- 22: Ausnehmung für Sicherungsband
- 23: Gelenk
- 24: Austrittsöffnung
- 25: Durchtrittsöffnung am Sicherungsband
- 26: Flügel an Befestigungsband oder ersten und zweiten Bügel
- 27: Sicherungslasche
- 28: Befestigungsmittel
- 29: Bandverschluss des Sicherungsbandes
- 30: Positioniernut
- 34: Einführhilfe für Sicherungsband

## Patentansprüche

1. Haltevorrichtung (1) für ein Kabel oder Rohr, mit:
- einem Haltefuß (2) zur Montage der Haltevorrichtung (1) an einem Untergrund,
- einer am Haltefuß (2) angeordneten Befestigungsvorrichtung zur Befestigung des Kabels oder Rohrs am Haltefuß (2),
- einem nicht-brennbaren Sicherungsband (11) für das Kabel oder Rohr zusätzlich zur Befestigungsvorrichtung, wobei die Haltevorrichtung (1) eine Vorrichtung zum Anbringen des nicht-brennbaren Sicherungsbands (11) an der Haltevorrichtung (1) unabhängig von einer Montage der Haltevorrichtung (1) am Untergrund aufweist, **dadurch gekennzeichnet, dass** das Sicherungsband (11) mit sich selbst verbindbar ist zur Ausbildung einer Schlaufe um ein durch die Befestigungsvorrichtung mit dem Haltefuß (2) verbundenes Rohr oder Kabel und dass das Sicherungsband (11) eine Durchtrittsöffnung (25) aufweist, in welche ein freies Ende des Sicherungsbandes (11) einführbar ist, wobei bevorzugt vorgesehen ist, dass das freie Ende des Sicherungsbandes (11) eine klauenförmige Ausbildung aufweist und die Klauen des freien Endes das Sicherungsband (11) im Bereich der Durchtrittsöffnung (25) hintergreifen.

2. Haltevorrichtung (1) nach Anspruch 1, wobei die Vorrichtung zum Anbringen des nicht-brennbaren Sicherungsbands (11) zumindest eine Halteklammer (20) für das Sicherungsband (11) aufweist, wobei bevorzugt eine an einer Montageseite (4) des Haltefußes (2) angeordnete Ausnehmung (22) und/oder eine Führung (19) für das Sicherungsband (11) vorgesehen sind.

3. Haltevorrichtung (1) nach wenigstens einem der vorangehenden Ansprüche, wobei die Durchtrittsöffnung (25) eine Verbreiterung zur Erleichterung des Einführens der Klauen aufweist, wobei sich an die Verbreiterung ein schlitzförmiger Abschnitt anschließt, wobei bevorzugt vorgesehen ist, dass die Verbreiterung durch eine umbiegbare Sicherungslasche (27) verschließbar ist.

4. Haltevorrichtung (1) nach wenigstens einem der vorangehenden Ansprüche, wobei das Sicherungsband (11) von Befestigungsmitteln (28), welche die Haltevorrichtung (1) mit einem Untergrund verbinden, galvanisch getrennt ist.

5. Haltevorrichtung (1) nach wenigstens einem der vorangehenden Ansprüche, wobei ein am Haltefuß angeordneter Ständer (3) vorgesehen ist - der vorzugsweise nach Art eines Fachwerkes ausgebildet ist - und welcher die Befestigungsvorrichtung zur Befestigung des Kabels oder Rohres vom Haltefuß (2) beabstandet, wobei der Ständer (3) an einem seitlichen Randbereich des Haltefußes (2) angeordnet ist, so dass eine von einer Montageseite (4) abgewandte Seite (5) des Haltefußes (2) neben dem Ständer (3) in einer Richtung normal auf die von der Montageseite (4) abgewandte Seite (5) wenigstens teilweise zugänglich ist.

6. Haltevorrichtung (1) nach wenigstens einem der vorangehenden Ansprüche, wobei das Sicherungsband (11) eine vorgefertigte abgewinkelte Form aufweist.

7. Haltevorrichtung (1) nach wenigstens einem der vorangehenden Ansprüche, wobei eine Vorfixierung (14) für das Kabel oder Rohr vorgesehen ist.

8. Haltevorrichtung (1) nach wenigstens einem der vorangehenden Ansprüche, wobei die Befestigungsvorrichtung ein Befestigungsband (6) und einen Bandverschluss (7) aufweist, wobei ein freies Bandende (8) des Befestigungsbandes (6) in eine Öffnung (9) des Bandverschlusses (7) einführbar ist und wobei vorgesehen ist, dass
- das Befestigungsband (6) einen bügelförmig ausgebildeten und vom Haltefuß (2) abstehenden Abschnitt (10) aufweist
- das freie Bandende (8) durch Druckausübung - vorzugsweise auf den bügelförmig ausgebildeten Abschnitt (10) des Befestigungsbandes (6) - in die Öffnung (9) des Bandverschlusses (7) einführbar und durch den Bandverschluss (7) verriegelbar ist.

9. Haltevorrichtung (1) nach Anspruch 8, wobei zumindest ein Gelenk (23) vorgesehen ist, welches eine Schwenkachse (S) für eine Schwenkbewegung des bügelförmig ausgebildeten Abschnitts (10) des Befestigungsbandes (6) bildet.

10. Haltevorrichtung (1) nach wenigstens einem der Ansprüche 1 bis 7, wobei die Befestigungsvorrichtung zur Befestigung des Kabels oder Rohr am Haltefuß (2) einen ersten Bügel (61) und einen zweiten Bügel (62) aufweist, die durch einen Bügelverschluss (7) miteinander verriegelbar sind, wobei ein freies Ende (8) des ersten Bügels (61) in eine Öffnung (9) des Bügelverschlusses (7) einführbar ist und wobei die Befestigungsvorrichtung weiters ein Gelenk (23) aufweist, welches den zweiten Bügel (62) mit dem Haltefuß (2) verbindet oder im zweiten Bügel (62) angeordnet ist, wobei der zweite Bügel (62) die Öffnung (9) des Bügelverschlusses (7) trägt und die Öffnung (9) des Bügelverschlusses (7) durch Druckausübung auf den zweiten Bügel (62) über das freie Ende (8) des ersten Bügels (61) bewegbar und durch den Bügelverschluss (7) verriegelbar ist.

11. Haltevorrichtung (1) nach wenigstens einem der Ansprüche 1 bis 10, wobei das Befestigungsband (6) bzw. einer der Bügel (61, 62) Flügel (26) für den Ausgleich unterschiedlicher Durchmesser der Kabel oder Rohre aufweist.

12. Haltevorrichtung (1) nach wenigstens einem der vorangehenden Ansprüche, wobei das Sicherungsband (11) einstückig ausgebildet ist.

13. Haltevorrichtung (1) nach wenigstens einem der vorangehenden Ansprüche, wobei das Sicherungsband (11) mehrteilig ausgebildet ist.

## Claims

1. Holding device (1) for a cable or pipe, comprising:
- a holding foot (2) for mounting the holding device (1) to a ground
- a fastening device arranged on the holding foot (2) for fastening the cable or pipe to the holding foot (2),
- a non-combustible safety strap (11) for the cable or pipe additional to the fastening device,
wherein the holding device (1) comprises a device for attaching the non-combustible safety strap (11) to the holding device (1), independent of a mounting of the holding device (1) to the ground, **characterised in that** the safety strap (11) is connectable to itself to form a loop around a pipe or cable connected to the holding foot (2) by the fastening device, and that the safety strap (11) has a passage opening (25) into which a free end of the safety strap (11) is insertable, wherein it is preferably provided that the free end of the safety strap (11) has a claw-shaped design, and the claws of the free end reach behind the safety strap (11) in the area of the passage opening (25).

2. Holding device (1) according to claim 1, wherein the device for attaching the non-combustible safety strap (11) has at least one retaining clamp (20) for the safety strap (11), wherein preferably a recess (22) arranged on a mounting side (4) of the holding foot (2), and/or a guide (19) for the safety strap (11) are provided.

3. Holding device (1) according to at least one of the preceding claims, wherein the passage opening (25) comprises a widening to facilitate the insertion of the claws, wherein the widening is followed by a slit-shaped section, wherein it is preferably provided that the widening is closable by a bendable safety lug (27).

4. Holding device (1) according to at least one of the preceding claims, wherein the safety strap (11) is galvanically separated from fastening means (28), which connect the holding device (1) to a ground.

5. Holding device (1) according to at least one of the preceding claims, wherein a stand (3) arranged on the holding foot is provided - which is preferably designed in the form of a truss - and which distances the fastening device for fastening the cable or pipe from the holding foot (2), wherein the stand (3) is arranged at a lateral edge area of the holding foot (2), so that a side (5) of the holding foot next to the stand (3) facing away from a mounting side (4) is at least partially accessible in a direction normal to the side (5) facing away from the mounting side (4).

6. Holding device (1) according to at least one of the preceding claims, wherein the safety strap (11) has a prefabricated angled shape.

7. Holding device (1) according to at least one of the preceding claims, wherein a pre-fixing (14) for the cable or pipe is provided.

8. Holding device (1) according to at least one of the preceding claims, wherein the fastening device has a fastening strap (6) and a strap fastener (7), wherein a free strap end (8) of the fastening strap (6) is insertable into an opening (9) of the strap fastener (7), and wherein it is provided that
- the fastening strap (6) has a section (10) which is of bracket-shaped design and faces away from the holding foot (2)
- the free strap end (8) is insertable into the opening (9) of the strap fastener (7) by exerting pressure - preferably on the bracket-shaped designed section (10) of the fastening strap (6) - and is lockable by the strap fastener (7).

9. Holding device (1) according to claim 8, wherein at least one joint (23) is provided, which forms a pivot axis (S) for a pivoting movement of the bracket-shaped designed section (10) of the fastening strap (6).

10. Holding device (1) according to at least one of claims 1 to 7, wherein the fastening device for fastening the cable or pipe to the holding foot (2) has a first bracket (61) and a second bracket (62), which can be locked together by a bracket fastener (7), wherein a free end (8) of the first bracket (61) is insertable into an opening (9) of the bracket fastener (7), and wherein the fastening device further has a joint (23), which connects the second bracket (62) to the holding foot (2) or is arranged in the second bracket (62), wherein the second bracket (62) carries the opening (9) of the bracket fastener (7), and the opening (9) of the bracket fastener (7) is movable over the free end (8) of the first bracket (61) by exerting pressure on the second bracket (62), and is lockable by the bracket fastener (7).

11. Holding device (1) according to at least one of claims 1 to 10, wherein the fastening strap (6) or one of the brackets (61, 62) has flaps (26) for the adjustment of different diameters of the cables or pipes.

12. Holding device (1) according to at least one of the preceding claims, wherein the safety strap (11) is designed as a single piece.

13. Holding device (1) according to at least one of the preceding claims, wherein the safety strap (11) is designed with multiple parts.

## Revendications

1. Dispositif de maintien (1) pour un câble ou un tuyau, avec :
- un pied de maintien (2) pour le montage du dispositif de maintien (1) sur un fond
- un dispositif de fixation disposé sur le pied de maintien (2) pour la fixation du câble ou du tuyau sur le pied de maintien (2),
- une bande de sécurité non inflammable (11) pour le câble ou le tuyau en plus du dispositif de fixation,
le dispositif de maintien (1) présentant un dispositif pour agencer la bande de sécurité non inflammable (11) sur le dispositif de maintien (1) indépendamment d'un montage du dispositif de maintien (1) sur le fond, **caractérisé en ce que** la bande de sécurité (11) peut être reliée à elle-même pour former une boucle autour d'un tuyau ou d'un câble relié au pied de maintien (2) par le dispositif de fixation et **en ce que** la bande de sécurité (11) présente une ouverture de passage (25), dans laquelle une extrémité libre de la bande de sécurité (11) peut être introduite, dans lequel il est prévu de préférence que l'extrémité libre de la bande de sécurité (11) présente une configuration en forme de griffe et que les griffes de l'extrémité libre saisissent par l'arrière la bande de sécurité (11) dans la zone de l'ouverture de passage (25).

2. Dispositif de maintien (1) selon la revendication 1, dans lequel le dispositif pour agencer la bande de sécurité non inflammable (11) présente au moins une bride de maintien (20) pour la bande de sécurité (11), dans lequel sont prévus, de préférence, un évidement (22) disposé sur un côté de montage (4) du pied de maintien (2) et / ou un guidage (19) pour la bande de sécurité (11).

3. Dispositif de maintien (1) selon au moins l'une des revendications précédentes, dans lequel l'ouverture de passage (25) présente un élargissement pour faciliter l'introduction des griffes, dans lequel se raccorde à l'élargissement une section en forme de fente, dans lequel il est prévu de préférence que l'élargissement puisse être obturé par un collier de sécurité flexible (27).

4. Dispositif de maintien (1) selon au moins l'une des revendications précédentes, dans lequel la bande de sécurité (11) est séparée galvaniquement des moyens de fixation (28), lesquels relient le dispositif de maintien (1) avec un fond,.

5. Dispositif de maintien (1) selon au moins l'une des revendications précédentes, dans lequel est prévu un montant (3) disposé sur le pied de maintien - qui est conçu de préférence à la manière d'un treillis - et lequel espace le dispositif de fixation, destiné à la fixation du câble ou du tuyau, du pied de maintien (2), dans lequel le montant (3) est disposé sur une zone marginale latérale du pied de maintien (2) de sorte qu'un côté (5), opposé à un côté de montage (4), du pied de maintien (2) est au moins partiellement accessible à côté du montant (3) dans un sens perpendiculaire au côté (5) opposé au côté de montage (4).

6. Dispositif de maintien (1) selon au moins l'une des revendications précédentes, dans lequel la bande de sécurité (11) présente une forme coudée préfabriquée.

7. Dispositif de maintien (1) selon au moins l'une des revendications précédentes, dans lequel une préfixation (14) est prévue pour le câble ou le tuyau.

8. Dispositif de maintien (1) selon au moins l'une des revendications précédentes, dans lequel le dispositif de fixation présente une bande de fixation (6) et une fermeture de bande (7), dans lequel une extrémité de bande libre (8) de la bande de fixation (6) peut être introduite dans une ouverture (9) de la fermeture de bande (7) et dans lequel il est prévu, que
- la bande de fixation (6) présente une section (10) conçue en forme d'étrier et faisant saillie du pied de maintien (2)
- l'extrémité de bande libre (8) peut être introduite en exerçant une pression - de préférence sur la section (10) conçue en forme d'étrier de la bande de fixation (6) - dans l'ouverture (9) de la fermeture de bande (7) et peut être verrouillée par la fermeture de bande (7).

9. Dispositif de maintien (1) selon la revendication 8, dans lequel au moins une articulation (23) est prévue, laquelle forme un axe de pivotement (S) pour un mouvement de pivotement de la section (10) conçue en forme d'étrier de la bande de fixation (6).

10. Dispositif de maintien (1) selon au moins l'une des revendications 1 à 7, dans lequel le dispositif de fixation pour la fixation du câble ou du tuyau sur le pied de maintien (2) présente un premier étrier (61) et un deuxième étrier (62), qui peuvent être verrouillés ensemble par une fermeture d'étrier (7), dans lequel une extrémité libre (8) du premier étrier (61) peut être introduite dans une ouverture (9) de la fermeture d'étrier (7) et dans lequel le dispositif de fixation présente en outre une articulation (23), laquelle relie le deuxième étrier (62) au pied de maintien (2) ou est disposée dans le deuxième étrier (62), dans lequel le deuxième étrier (62) porte l'ouverture (9) de la fermeture d'étrier (7) et l'ouverture (9) de la fermeture d'étrier (7) peut être déplacée en exerçant une pression sur le deuxième étrier (62) par-dessus l'extrémité libre (8) du premier étrier (61) et peut être verrouillée par la fermeture d'étrier (7).

11. Dispositif de maintien (1) selon au moins l'une des revendications 1 à 10, dans lequel la bande de fixation (6) ou l'un des étriers (61, 62) présente des ailettes (26) pour compenser les différents diamètres des câbles ou des tuyaux.

12. Dispositif de maintien (1) selon au moins l'une des revendications précédentes, dans lequel la bande de sécurité (11) est conçue d'une seule pièce.

13. Dispositif de maintien (1) selon au moins l'une des revendications précédentes, dans lequel la bande de sécurité (11) est conçue en plusieurs parties.
